# EUROPÄISCHE PATENTSCHRIFT

(11) **EP 3 069 865 B1**
(45) Veröffentlichungstag und Bekanntmachung des Hinweises auf die Patenterteilung: **13.10.2021**
(21) Anmeldenummer: 15159473.6
(22) Anmeldetag: 17.03.2015
(51) Int. Cl.: B32B 1/08, B32B 3/02, F16L 11/15, F16L 11/04, F16L 9/133, F16L 9/12, F16L 9/06, F16L 9/00, B32B 3/30, B32B 3/28, B32B 27/34, B32B 27/30, B32B 27/08, B32B 3/26, B32B 7/04, B32B 7/12, B32B 7/08

(54) **MEHRSCHICHTIGE KRAFTFAHRZEUGROHRLEITUNG**
MULTILAYER MOTOR VEHICLE SUPPLY LINE
CONDUITE MULTICOUCHES POUR VÉHICULES AUTOMOBILES

(43) Veröffentlichungstag der Anmeldung: 21.09.2016
(73) Patentinhaber: TI Automotive (Fuldabrück) GmbH, 34277 Fuldabrück (DE)
(72) Erfinder: Zimmer, Werner, 34212 Melsungen/Röhrenfurth (DE); Fahrenholz, Frank, 34128 Kassel (DE)
(74) Vertreter: Rohmann, Michael

(56) Entgegenhaltungen:
- US-A1- 2005 276 985

## Beschreibung

Die Erfindung betrifft eine mehrschichtige Kraftfahrzeugrohrleitung, insbesondere eine mehrschichtige Kraftstoffrohrleitung für Kraftfahrzeuge, wobei die Rohrleitung zumindest zwei Schichten aus Kunststoff, bevorzugt zumindest drei Schichten aus Kunststoff aufweist. Die Schichten bestehen dabei insbesondere aus thermoplastischem Kunststoff.

Mehrschichtige Kraftfahrzeugrohrleitungen bzw. Kraftstoffrohrleitungen der vorstehend genannten Art sind aus der Praxis in unterschiedlichen Ausführungsformen bekannt. Ein Problem ist oftmals die Haftung zwischen den einzelnen Schichten im Schichtenlaminat. Viele bekannte mehrschichtige Rohrleitungen dieser Art zeigen nach längerer Betriebszeit unerwünschte Delaminationseigenschaften, die letztendlich die Kraftfahrzeugrohrleitungen unbrauchbar machen können. Es kann zu Leckagen und zum Fahrzeugausfall kommen. Die Delamination wird durch äußere chemische, thermische und mechanische Einflüsse in der Regel noch verstärkt bzw. beschleunigt. Diese Delaminationsprobleme treffen grundsätzlich mehr oder weniger für alle Schichten in einem Schichtenlaminat der Rohrleitung zu. Besonders betroffen sind aber häufig im Laminatverbund angeordnete Haftvermittlerschichten bzw. die durch sie verbundenen Schichten. Entsprechende Probleme ergeben sich oftmals auch für im Schichtenverbund vorhandene Barriereschichten bzw. Permeations-und/oder Diffusions-Barriereschichten, beispielsweise Barriereschichten aus Ethylen-Vinylalkohol-Copolymer (EVOH). US 2005/276985 A1 offenbart eine mehrschichtige Kraftstoffrohrleitung für Kraftfahrzeuge, wobei die Rohrleitung zumindest drei Schichten aus Kunststoff aufweist, wobei eine mit einer weiteren Schicht verbundene Oberfläche einer Schicht profiliert ausgebildet ist.

Die aus der Praxis bekannten mehrschichtigen Kraftfahrzeugrohrleitungen sind insoweit verbesserungsbedürftig.

Demgegenüber liegt der Erfindung das technische Problem zugrunde, eine mehrschichtige Kraftfahrzeugrohrleitung der eingangs genannten Art anzugeben, bei der die vorstehend beschriebenen Nachteile vermieden werden können bzw. minimiert werden können und bei der insbesondere ein langfristig gegenüber Delamination stabiler Mehrschichtenverbund erzielt werden kann. Zur Lösung des technischen Problems lehrt die Erfindung eine mehrschichtige Kraftfahrzeugrohrleitung, insbesondere eine mehrschichtige Kraftstoffrohrleitung für Kraftfahrzeuge, wobei die Rohrleitung zumindest zwei Schichten aus Kunststoff, bevorzugt zumindest drei Schichten aus Kunststoff aufweist, wobei zumindest eine mit einer weiteren Schicht verbundene Oberfläche zumindest einer Schicht profiliert ausgebildet ist, wobei die Profilierung Maxima und Minima aufweist wobei die Profilierung der zumindest einen profilierten Oberfläche im Querschnitt wellenförmig bzw. wellenartig ausgebildet ist und wobei die Höhendifferenz Δh zwischen den Maxima und den den Maxima benachbarten bzw. unmittelbar benachbarten Minima zwischen 1 und 100 µm, vorzugsweise zwischen 1 und 50 µm liegt, bevorzugt zwischen 1 und 25 µm und besonders bevorzugt zwischen 1 und 20 µm liegt, und wobei die Abstände a zwischen den Maxima und den den Maxima unmittelbar benachbarten Minima einer profilierten Oberfläche 1 bis 100 µm betragen.

Es liegt im Rahmen der Erfindung, dass die zumindest zwei Schichten, bevorzugt mindestens drei Schichten der Rohrleitung aus thermoplastischem Kunststoff bestehen bzw. im Wesentlichen aus thermoplastischem Kunststoff bestehen. Weiterhin liegt es im Rahmen der Erfindung, dass die zumindest eine erfindungsgemäß profilierte Schicht an ihren beiden gegenüberliegenden Oberflächen erfindungsgemäß profiliert ausgebildet ist, wobei vorzugsweise jede Profilierung der beiden Oberflächen die vorstehend spezifizierten Maxima und Minima aufweist.

Es empfiehlt sich, dass die zumindest eine erfindungsgemäß profilierte Schicht bzw. die zumindest eine erfindungsgemäß profilierte Oberfläche dieser Schicht über zumindest 80 %, vorzugsweise über zumindest 90 % und bevorzugt über zumindest 95 % des Umfanges der Rohrleitung umläuft. Besonders bevorzugt läuft die zumindest eine erfindungsgemäß profilierte Schicht bzw. die zumindest eine erfindungsgemäß profilierte Oberfläche dieser Schicht über den gesamten Umfang der Rohrleitung um. Zweckmäßigerweise sind die Maxima und Minima der Profilierung gleichmäßig bzw. im Wesentlichen gleichmäßig über den Umfang der Rohrleitung verteilt angeordnet.

Es liegt im Rahmen der Erfindung, dass die mit einer erfindungsgemäß profilierten Oberfläche einer ersten Schicht verbundene Oberfläche einer weiteren bzw. einer zweiten Schicht ebenfalls erfindungsgemäß profiliert ausgebildet ist, wobei vorzugsweise diese Profilierung der weiteren Schicht bzw. der zweiten Schicht analog bzw. komplementär zu der Profilierung der ersten Schicht ausgebildet ist. So weist die zweite Schicht zweckmäßigerweise ebenfalls Maxima und Minima auf und die Höhendifferenz Δh zwischen den Maxima und den den Maxima unmittelbar benachbarten Minima liegt zwischen 1 und 100 µm, vorzugsweise zwischen 1 und 50 µm liegt, bevorzugt zwischen 1 und 25 µm und besonders bevorzugt zwischen 1 und 20 µm. Nach einer empfohlenen Ausführungsform der Erfindung ist zumindest eine Schicht bzw. zumindest eine erste Schicht an ihren beiden Oberflächen erfindungsgemäß profiliert ausgebildet und an zumindest eine und bevorzugt an jede dieser erfindungsgemäß profilierten Oberflächen ist eine erfindungsgemäß profilierte Oberfläche einer weiteren Schicht angeschlossen. Vorzugsweise sind die Profilierungen einer erfindungsgemäß profilierten Oberfläche der einen bzw. der ersten Schicht komplementär zu den Profilierungen einer daran angeschlossenen erfindungsgemäß profilierten Oberfläche einer weiteren bzw. zweiten Schicht ausgebildet.

Es liegt im Rahmen der Erfindung, dass die Maxima der erfindungsgemäß profilierten Oberfläche einer ersten Schicht formschlüssig - und bevorzugt kraftschlüssig - in die Minima der erfindungsgemäß profilierten Oberfläche einer daran angeschlossenen weiteren Schicht bzw. zweiten Schicht eingreifen und dass zweckmäßigerweise die Maxima der erfindungsgemäß profilierten Oberfläche der weiteren bzw. zweiten Schicht umgekehrt formschlüssig - und empfohlenermaßen kraftschlüssig - in die Minima der erfindungsgemäß profilierten Oberfläche der ersten Schicht eingreifen. Dementsprechend ist die Höhendifferenz Δh zwischen den Maxima und den unmittelbar benachbarten Minima bei der ersten Schicht und bei der weiteren bzw. bei der zweiten Schicht gleich bzw. im Wesentlichen gleich. Es liegt weiterhin im Rahmen der Erfindung, dass die Maxima und Minima der ersten Schicht und die Maxima und Minima der daran angeschlossenen weiteren bzw. zweiten Schicht die gleiche Form bzw. im Wesentlichen die gleiche Form aufweisen.

Eine besonders empfohlene Ausführungsform der Erfindung ist dadurch gekennzeichnet, dass die Abstände a zwischen den Maxima und den den Maxima unmittelbar benachbarten Minima einer erfindungsgemäß profilierten Oberfläche 1 bis 50 µm, bevorzugt 1 bis 25 µm und besonders bevorzugt 2 bis 20 µm betragen. Es liegt dabei im Rahmen der Erfindung, dass die Abstände a in Umfangsrichtung der Rohrleitung gemessen werden.

Nach einer empfohlenen Ausführungsvariante der Erfindung ist die zumindest eine mit zumindest einer erfindungsgemäß profilierten Oberfläche versehene Schicht eine mittlere Schicht der Rohrleitung, die über ihre beiden Oberflächen mit jeweils einer weiteren Schicht der Rohrleitung verbunden ist. Gemäß einer bevorzugten Ausführungsform sind dabei beide Oberflächen der mittleren Schicht als erfindungsgemäß profilierte Oberflächen ausgebildet. Zweckmäßigerweise ist eine mit einer erfindungsgemäß profilierten Oberfläche der mittleren Schicht verbundene Oberfläche einer weiteren Schicht als profilierte Oberfläche und insbesondere als erfindungsgemäß profilierte Oberfläche ausgeführt. Bei der mittleren Schicht handelt es sich nach besonders bevorzugter Ausführungsform der Erfindung um eine Haftvermittlerschicht zwischen zwei Schichten des Rohrleitungslaminates. Es kann sich dabei aber auch um eine Barriereschicht bzw. eine Permeations- und/oder Diffusions-Barriereschicht handeln.

Eine bewährte Ausführungsform der Erfindung ist dadurch gekennzeichnet, dass es sich bei einer erfindungsgemäß profilierten Schicht um eine Haftvermittlerschicht handelt, die mit ihren beiden Oberflächen an jeweils eine weitere Schicht angeschlossen ist, wobei vorzugsweise beide Oberflächen der Haftvermittlerschicht profiliert und empfohlenermaßen erfindungsgemäß profiliert ausgebildet sind. Eine solche Haftvermittlerschicht weist zweckmäßigerweise eine Dicke von 0,02 mm bis 0,15 mm, vorzugsweise eine Dicke von 0,03 mm bis 0,12 mm und besonders bevorzugt eine Dicke von 0,03 mm bis 0,10 mm auf. Eine besonders bevorzugte Ausführungsform der Erfindung zeichnet sich dadurch aus, dass zumindest eine erfindungsgemäß profilierte Oberfläche der Haftvermittlerschicht an eine Barriereschicht bzw. eine Permeations- und/oder Diffusions-Barriereschicht angeschlossen ist. Zweckmäßigerweise ist auch die an die Haftvermittlerschicht angeschlossene Oberfläche der Barriereschicht erfindungsgemäß profiliert. Eine bevorzugte Ausführungsform der Erfindung ist dadurch gekennzeichnet, dass in der mehrschichtigen Rohrleitung zwei Haftvermittlerschichten vorgesehen sind, die beide erfindungsgemäß profiliert sind und vorzugsweise beide an ihren beiden gegenüberliegenden Oberflächen profiliert und besonders bevorzugt erfindungsgemäß profiliert sind. Nach einer empfohlenen Ausführungsform ist zwischen den beiden Haftvermittlerschichten eine Schicht bzw. lediglich eine Schicht zwischengeschaltet, wobei es sich bei dieser zwischengeschalteten Schicht vorzugsweise um eine Barriereschicht handelt. Dabei sind zweckmäßigerweise zumindest die beiden mit der Barriereschicht verbundenen Oberflächen der Haftvermittlerschichten erfindungsgemäß profiliert. Empfohlenermaßen ist auch die Barriereschicht dann an ihren beiden gegenüberliegenden Oberflächen erfindungsgemäß profiliert. Vorzugsweise weisen beide Haftvermittlerschichten die oben für die Haftvermittlerschicht angegebenen Dicken auf. Zweckmäßigerweise sind an den der Barriereschicht abgewandten Oberflächen bzw. erfindungsgemäß profilierten Oberflächen der beiden Haftvermittlerschichten weitere Schichten der mehrschichtigen Rohrleitung angeschlossen. Dabei besteht gemäß einer Ausführungsform zumindest eine der außen unmittelbar an die Haftvermittlerschichten angeschlossenen Schichten aus Polyamid bzw. im Wesentlichen aus Polyamid. Vorzugsweise bestehen beide unmittelbar angeschlossene Schichten aus Polyamid bzw. im Wesentlichen aus Polyamid. Es versteht sich, dass eine Haftvermittlerschicht die Haftung zwischen den beiden an ihren Oberflächen angeschlossenen Schichten gewährleistet bzw. sicherstellt. Bei der Haftvermittlerschicht bzw. bei den Haftvermittlerschichten kann es sich beispielsweise um eine Haftvermittlerschicht bzw. um Haftvermittlerschichten auf Basis von Polyamid handeln. Die Barriereschicht besteht nach einer Ausführungsform der Erfindung aus Ethylen-Vinylalkohol-Copolymer (EVOH) bzw. im Wesentlichen aus Ethylen-Vinylalkohol-Copolymer (EVOH). Die Dicke der Barriereschicht beträgt zweckmäßigerweise 0,05 bis 0,3 mm, bevorzugt 0,10 bis 0,25 mm und besonders bevorzugt 0,11 bis 0,20 mm, beispielsweise 0,15 mm. Wenn nach bevorzugter Ausführungsform der Erfindung im Schichtenverbund zumindest eine, bevorzugt zumindest zwei an ihren Oberflächen erfindungsgemäß profilierte bzw. an ihren beiden Oberflächen erfindungsgemäß profilierte Haftvermittlerschichten vorgesehen sind, liegt es im Rahmen der Erfindung, dass auch die an deren erfindungsgemäß profilierten Oberflächen jeweils angeschlossenen Schichten bzw. deren angeschlossene Oberflächen erfindungsgemäß profiliert sind. Erfindungsgemäß profiliert meint insbesondere, dass die oben spezifizierte Höhendifferenz Δh und bevorzugt die oben spezifizierten Abstände a vorgesehen sind. Es liegt weiterhin im Rahmen der Erfindung, dass die oben angegebenen Schichtdicken der Schichten bei Vorhandensein erfindungsgemäß profilierter Oberflächen lediglich von den Minima der Schichten aus gemessen werden.

Eine weitere Ausführungsvariante der Erfindung ist dadurch gekennzeichnet, dass eine mit einer erfindungsgemäß profilierten Oberfläche versehene Schicht die innere Schicht der Rohrleitung ist, die mit ihrer äußeren erfindungsgemäß profilierten Oberfläche an eine weitere Schicht angeschlossen ist. Es liegt im Rahmen der Erfindung, dass diese innere Schicht mit ihrer inneren Oberfläche mit dem die Rohrleitung durchströmenden fluiden Medium in Kontakt kommt. Zweckmäßigerweise ist die innere Oberfläche der inneren Schicht der Rohrleitung unprofiliert bzw. im Wesentlichen unprofiliert ausgebildet. - Im Übrigen ist nach bevorzugter Ausführungsform der Erfindung die Außenoberfläche der äußeren Schicht der Rohrleitung unprofiliert bzw. im Wesentlichen unprofiliert ausgebildet.

Nach besonders empfohlener Ausführungsform der Erfindung wird die erfindungsgemäße mehrschichtige Kraftfahrzeugrohrleitung bzw. Kraftstoffrohrleitung durch Koextrusion hergestellt. Es liegt somit im Rahmen der Erfindung, dass die Schichten bzw. alle Schichten der mehrschichtigen Rohrleitung aus Kunststoff bzw. aus thermoplastischem Kunststoff bestehen. - Zweckmäßigerweise wird zumindest die mit zumindest einer erfindungsgemäß profilierten Oberfläche versehene Schicht und die zumindest eine an die erfindungsgemäß profilierte Oberfläche angeschlossene Schicht durch Koextrusion hergestellt. Es liegt im Rahmen der Erfindung, das der für die Koextrusion eingesetzte Extruder mit der Maßgabe ausgebildet ist, dass bei der Koextrusion die zumindest eine Schicht mit der zumindest einen erfindungsgemäß profiliert ausgebildeten Oberfläche entsteht. Es liegt weiterhin im Rahmen der Erfindung, dass der für die Extrusion der erfindungsgemäßen Rohrleitung eingesetzte Extruder Ringkanäle für die Extrusion der einzelnen Schichten der Rohrleitung aufweist. Zur Realisierung der zumindest einen erfindungsgemäß profilierten Oberfläche zumindest einer Schicht ist zweckmäßigerweise zumindest ein Ringkanal mit in radialer Richtung verlaufenden Querstegen versehen. Dabei können sich die Querstege über die gesamte radiale Weite des Ringkanals erstrecken. Insbesondere wenn eine Schicht mit nur einer erfindungsgemäß profilierten Oberfläche hergestellt werden soll, können sich die Querstege aber auch nur über einen Teil der radialen Weite des betreffenden Ringkanals erstrecken. Die durch die Querstege erzeugte Unterbrechung erwirkt die Bildung der Maxima und Minima der erfindungsgemäß hergestellten profilierten Oberfläche bzw. Oberflächen. Es liegt dabei im Rahmen der Erfindung, dass die betreffende Schicht der Rohrleitung an beiden gegenüberliegenden Oberflächen erfindungsgemäß profiliert ausgebildet ist/wird.

Zweckmäßigerweise erstrecken sich die Maxima und Minima einer erfindungsgemäß profilierten Oberfläche in Längsrichtung der Rohrleitung. Es empfiehlt sich somit, dass die Maxima und Minima in Form von in Längsrichtung der Rohrleitung verlaufenden Stegen und Nuten ausgebildet sind. Dabei ist es bevorzugt - aber nicht unbedingt erforderlich - dass die Höhendifferenz Δh zwischen den Maxima und Minima in Längsrichtung der Rohrleitung konstant bleibt bzw. im Wesentlichen konstant bleibt. Entsprechendes gilt auch für die Abstände a zwischen den Maxima und den Minima. - Es liegt im Rahmen der Erfindung, dass sich die zumindest eine erfindungsgemäß profilierte Schicht bzw. die erfindungsgemäß profilierte Oberfläche dieser Schicht und dass sich bevorzugt zumindest zwei und besonders bevorzugt alle erfindungsgemäß profilierten Schichten bzw. die erfindungsgemäß profilierten Oberflächen dieser Schichten über zumindest 80 %, vorzugsweise über zumindest 90 % und besonders bevorzugt über zumindest 95 % des Umfanges der Rohrleitung erstrecken. Nach sehr empfohlener Ausführungsform läuft die zumindest eine erfindungsgemäß profilierte Schicht bzw. die erfindungsgemäß profilierte Oberfläche dieser Schicht und gemäß besonders bewährter Ausführungsvariante zumindest zwei erfindungsgemäß profilierte Schichten und bevorzugt zumindest alle erfindungsgemäß profilierten Schichten bzw. deren erfindungsgemäß profilierte Oberflächen über den gesamten Umfang der Rohrleitung um.

Die Profilierung der zumindest einen erfindungsgemäß profilierten Oberfläche ist im Querschnitt wellenförmig ausgebildet. Die Wellenberge und/oder die Wellentäler dieser im Querschnitt wellenförmigen Profilierung können dabei spitz und/oder abgerundet ausgebildet sein.

Es liegt im Rahmen der Erfindung, dass sich die Maxima und die Minima bzw. die Wellenberge und die Wellentäler in Form von Stegen und Nuten in Längsrichtung der Rohrleitung erstrecken. Nach einer empfohlenen Ausführungsform der Erfindung sind diese Stege und Nuten parallel zur Längsachse L der Rohrleitung bzw. im Wesentlichen parallel zur Längsachse L der Rohrleitung angeordnet. Es liegt fernerhin im Rahmen der Erfindung, dass die Stege einer erfindungsgemäß profilierten Oberfläche in die Nuten einer daran angeschlossenen erfindungsgemäß profilierten Oberfläche eingreifen, vorzugsweise formschlüssig und bevorzugt kraftschlüssig eingreifen und umgekehrt.

Der Erfindung liegt die Erkenntnis zugrunde, dass aufgrund der erfindungsgemäßen Profilierung zumindest einer Oberfläche einer Schicht der erfindungsgemäßen Rohrleitung eine sehr effektive und funktionssichere Haftung zwischen den entsprechenden benachbarten Schichten der Rohrleitung erzielt werden kann. Das trifft insbesondere für die bevorzugte Ausführungsform der Erfindung zu, bei der beide miteinander verbundene Oberflächen zweier benachbarter Schichten profiliert ausgebildet sind und wobei die Profilierung der einen Schicht komplementär zu der Profilierung der anderen Schicht ist. Wesentlich ist auch, dass dieser erfindungsgemäße Vorteil mit sehr einfachen und wenig aufwendigen Mitteln erzielt werden kann. Die erfindungsgemäßen Profilierungen können ohne Probleme bei einer Extrusion bzw. Koextrusion mit einem entsprechend ausgestalteten Extruder hergestellt werden. Besonders mittlere Schichten im Laminatverbund einer erfindungsgemäßen Kraftfahrzeugrohrleitung können besonders fest haftend in dem Verbund gehalten werden und zeichnen sich auch langfristig bei chemischen Einflüssen sowie bei thermischen und mechanischen Beanspruchungen durch eine exzellente Haftung bzw. Adhäsion aus. Besonders bewährt hat sich die erfindungsgemäße Profilierung bei Haftvermittlerschichten. Diese Haftvermittlerschichten stellen dann einen besonders effektiven und festen Verbund der daran angeschlossenen Schichten sicher. Demzufolge kann auf weiteren Aufwand zur Verbesserung der Haftung verzichtet werden und insoweit zeichnet sich eine erfindungsgemäße Rohrleitung durch geringen Aufwand und geringe Kosten aus.

Nachfolgend wird die Erfindung anhand einer lediglich einer Ausführungsbeispiel darstellenden Zeichnung näher erläutert. Es zeigen in schematischer Darstellung:
- **Fig. 1**: einen Querschnitt durch eine mehrschichtige bzw. sechsschichtige Rohrleitung nach dem Stand der Technik,
- **Fig. 2**: eine mit erfindungsgemäßen Profilierungen ausgestattete mehrschichtige bzw. sechsschichtige Rohrleitung,
- **Fig. 3**: den Gegenstand gemäß Fig. 2 in perspektivischer Ansicht,
- **Fig. 4**: eine sehr schematische Darstellung des Querschnittes eines Extruders zur Herstellung einer erfindungsgemäßen Rohrleitung.

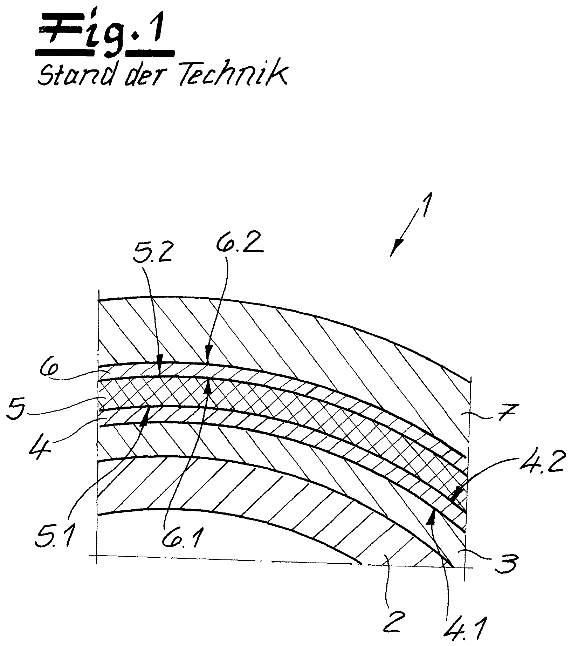

Im Ausführungsbeispiel nach den Figuren weist die Rohrleitung 1 insgesamt sechs Schichten 2 bis 7 auf. Es ist eine mittlere Barriereschicht 5 vorgesehen, an deren Oberflächen 5.1 und 5.2 jeweils eine Haftvermittlerschicht 4 bzw. 6 angeschlossen ist. An die innere Haftvermittlerschicht 4 schließen zwei innere Schichten 3 und 2 an und an die äußere Haftvermittlerschicht 6 schließt eine äußere Schicht 7 an. Die Fig. 1 zeigt eine aus dem Stand der Technik bekannte sechsschichtige Kraftfahrzeugrohrleitung. Die Oberflächen der Schichten, insbesondere die Oberflächen 4.1 und 4.2 der inneren Haftvermittlerschicht 4 sowie die Oberflächen 6.1 und 6.2 der äußeren Haftvermittlerschicht 6 und auch die beiden Oberflächen 5.1 und 5.2 der mittleren Barriereschicht 5 sind hier glatt bzw. unprofiliert ausgebildet.

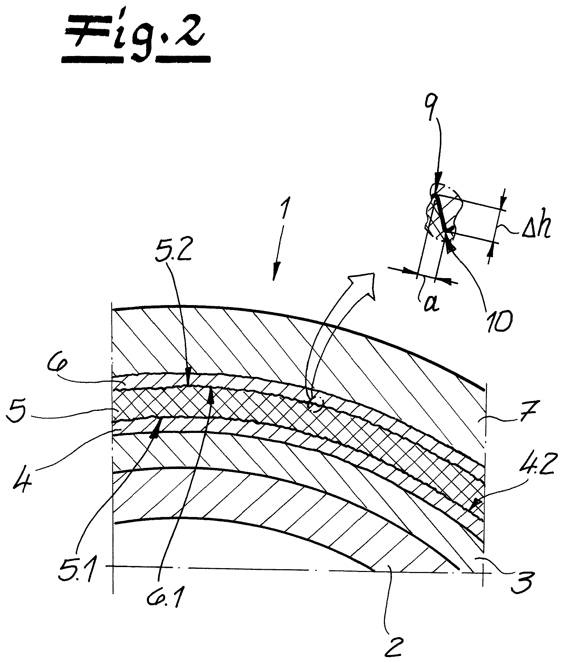

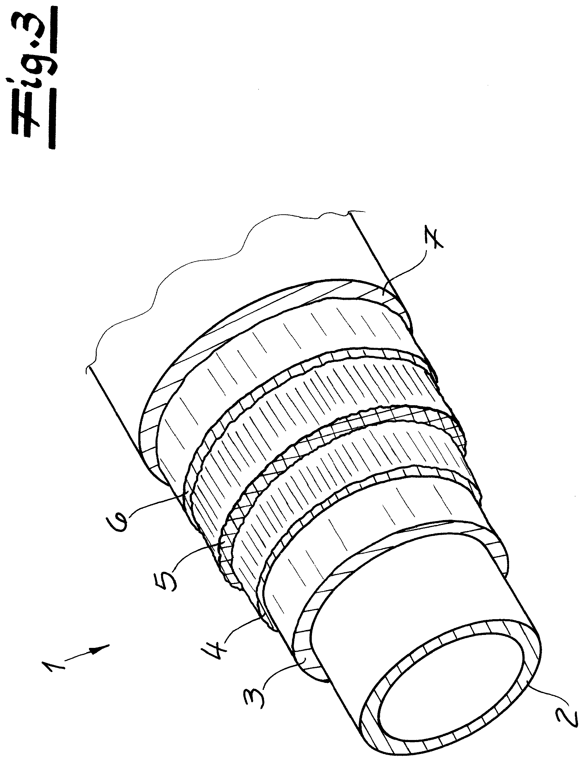

Die Fig. 2 und 3 zeigen dagegen eine erfindungsgemäße Rohrleitung. Hier ist die außenseitige Oberfläche 4.2 der inneren Haftvermittlerschicht 4 sowie die innenseitige Oberfläche 6.1 der äußeren Haftvermittlerschicht 6 erfindungsgemäß profiliert ausgebildet. Die Profilierung weist Maxima 9 und Minima 10 auf, wobei der Höhenunterschied Δh zwischen den Maxima 9 den den Maxima 9 unmittelbar benachbarten Minima 10 zwischen 1 und 20 µm, bevorzugt zwischen 5 und 15 µm liegt. Im Ausführungsbeispiel mag die Höhendifferenz Δh etwa 10 µm betragen. Die Höhendifferenz Δh zwischen den Maxima 9 und den Minima 10 wird zweckmäßigerweise und im Ausführungsbeispiel als der radiale Abstand der Maxima und Minima gemessen. Das ist in dem vergrößerten Ausschnitt der Fig. 2 dargestellt. Vorzugsweise und im Ausführungsbeispiel ist auch die der außenseitigen Oberfläche 4.2 der inneren Haftvermittlerschicht 4 zugewandte innenseitige Oberfläche 5.1 der Barriereschicht 5 erfindungsgemäß profiliert ausgebildet. Ebenso ist auch die der innseitigen Oberfläche 6.1 der äußeren Haftvermittlerschicht 6 zugewandte außenseitige Oberfläche 5.2 der Barriereschicht 5 erfindungsgemäß profiliert ausgebildet. Die Profilierung der Oberflächen 5.1 und 5.2 der Barriereschicht 5 ist bevorzugt und im Ausführungsbeispiel komplementär zu den Profilierungen der jeweils zugeordneten Oberflächen 4.2 und 6.1 der Haftvermittlerschichten 4, 6 ausgebildet. Empfohlenermaßen greifen die Maxima 9 der außenseitigen Oberfläche 4.2 der inneren Haftvermittlerschicht 4 in die Minima 10 der innenseitigen Oberfläche 5.1 der Barriereschicht 5 formschlüssig und bevorzugt auch kraftschlüssig ein und umgekehrt. Zweckmäßigerweise greifen die Maxima 9 der innenseitigen Oberfläche 6.1 der äußeren Haftvermittlerschicht 6 formschlüssig und bevorzugt auch kraftschlüssig in die Minima 10 der außenseitigen Oberfläche 5.2 der Barriereschicht 5 ein und umgekehrt. Es findet somit gleichsam eine Verkrallung der Haftvermittlerschichten 4, 6 mit der Barriereschicht 5 über die ineinandergreifenden Profilierungen bzw. Maxima 9 und Minima 10 statt. Die in Umfangsrichtung der Rohrleitung 1 gemessenen Abstände a zwischen den Maxima 9 und den den Maxima 9 unmittelbar benachbarten Minima 10 betragen vorzugsweise 1 bis 20 µm und sehr bevorzugt 5 bis 15 µm. Insbesondere in der Fig. 2 ist erkennbar, dass die profilierten Oberflächen 4.2, 5.1, 5.2 und 6.1 sehr bevorzugt und im Ausführungsbeispiel im Querschnitt wellenförmig ausgebildet sind. Dabei wird in der Regel eine mehr oder weniger unregelmäßige Wellenstruktur erzielt.

Die mittlere Barriereschicht 5 mag im Ausführungsbeispiel aus Ethylen-Vinylalkohol-Copolymer (EVOH) bestehen. Die daran angeschlossenen Haftvermittlerschichten 4, 6 sind zweckmäßigerweise Haftvermittlerschichten 4, 6 auf Basis von Polyamid. Die Dicke der mittleren Barriereschicht 5 beträgt bevorzugt und im Ausführungsbeispiel 0,1 bis 0,2 mm und beispielsweise 0,15 mm. Die Dicke der Haftvermittlerschichten beträgt bevorzugt und im Ausführungsbeispiel 0,02 mm bis 0,1 mm, bevorzugt 0,03 mm bis 0,07 mm und beispielsweise 0,05 mm.

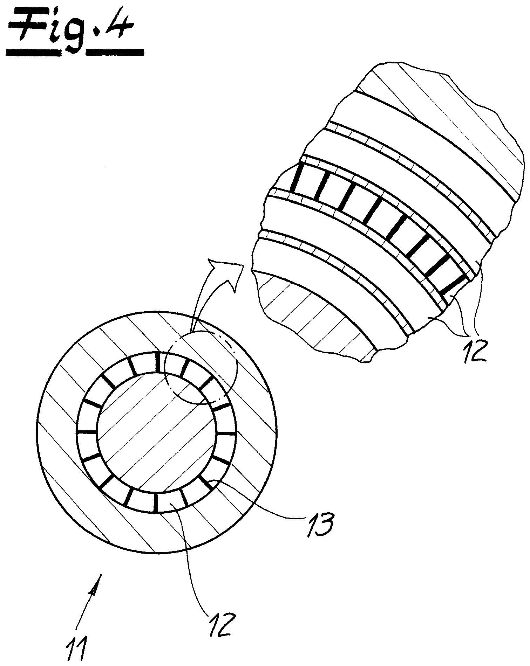

Die Schichten der erfindungsgemäßen mehrschichtigen Kraftfahrzeugrohrleitung bestehen nach bevorzugter Ausführungsform der Erfindung aus thermoplastischem Kunststoff. Es liegt im Rahmen der Erfindung, dass die erfindungsgemäße mehrschichtige Kraftfahrzeugrohrleitung durch Koextrusion hergestellt wird. Die Fig. 4 zeigt den Querschnitt eines Extruders 11 für eine solche Koextrusion, wobei mit diesem Extruder 11 erfindungsgemäß profilierte Oberflächen einer Schicht erzeugt werden können. Dazu weist der Extruder 11 einen Ringkanal 12 mit radialen Querstegen 13 auf. Mit Hilfe dieser radialen Querstege 13 in dem Ringkanal 12 kann die betreffende extrudierte Schicht mit erfindungsgemäß profilierten bzw. wellenförmigen Oberflächen versehen werden. Es versteht sich, dass der Extruder 11 weitere entsprechende Ringkanäle 12 für die Schichten der Rohrleitung 1 aufweisen kann, wenn weitere profilierte Oberflächen erzeugt werden sollen. Diese Ringkanäle 12 sind in der Fig. 4 aber nicht weiter dargestellt wurden. Insoweit zeigt Fig. 4 nur einen stark vereinfachten Querschnitt eines entsprechenden Extruders 11.

## Patentansprüche

1. Mehrschichtige Kraftfahrzeugrohrleitung, insbesondere Kraftstoffrohrleitung für Kraftfahrzeuge, wobei die Rohrleitung (1) zumindest zwei Schichten, bevorzugt zumindest drei Schichten (4, 5, 6) aus Kunststoff aufweist, wobei zumindest eine mit einer weiteren Schicht verbundene Oberfläche zumindest einer Schicht profiliert ausgebildet ist, wobei die Profilierung Maxima (9) und Minima (10) aufweist,
**dadurch gekennzeichnet, dass**
die Profilierung der zumindest einen profilierten Oberfläche im Querschnitt wellenförmig bzw. wellenartig ausgebildet ist, wobei die Höhendifferenz Δh zwischen den Maxima (9) und den den Maxima (9) unmittelbar benachbarten Minima (10) zwischen 1 und 100 µm, vorzugsweise zwischen 1 und 50 µm und bevorzugt zwischen 1 und 25 µm liegt und wobei die Abstände a zwischen den Maxima (9) und den den Maxima (9) unmittelbar benachbarten Minima (10) einer profilierten Oberfläche 1 bis 100 µm betragen.

2. Kraftfahrzeugrohrleitung nach Anspruch 1, wobei die mit einer profilierten Oberfläche einer ersten Schicht verbundene Oberfläche einer weiteren bzw. zweiten Schicht ebenfalls profiliert ausgebildet ist, wobei vorzugsweise diese Profilierung der zweiten Schicht ebenfalls Maxima (9) und Minima (10) aufweist und wobei die Höhendifferenz Δh zwischen den Maxima (9) und den den Maxima (9) unmittelbar benachbarter Minima (10) zwischen 1 und 100 µm, vorzugsweise zwischen 1 und 50 µm und bevorzugt zwischen 1 und 25 µm liegt.

3. Kraftfahrzeugrohrleitung nach Anspruch 2, wobei die Maxima (9) der profilierten Oberfläche der ersten Schicht formschlüssig - und bevorzugt kraftschlüssig - in die Minima (10) der profilierten Oberfläche der zweiten Schicht eingreifen und umgekehrt.

4. Kraftfahrzeugrohrleitung nach einem der Ansprüche 1 bis 3, wobei die zumindest eine profilierte Schicht bzw. die zumindest eine profilierte Oberfläche dieser Schicht über zumindest 80 %, vorzugsweise über zumindest 90 % und bevorzugt über zumindest 95 % des Umfanges der Rohrleitung (1) umläuft und besonders bevorzugt über den gesamten Umfang der Rohrleitung (1) umläuft.

5. Kraftfahrzeugrohrleitung nach einem der Ansprüche 1 bis 4, wobei zumindest eine mit zumindest einer profilierten Oberfläche versehene Schicht eine (mittlere) Schicht der Rohrleitung ist, die über ihre beiden Oberflächen mit jeweils einer weiteren Schicht der Rohrleitung verbunden ist.

6. Kraftfahrzeugrohrleitung nach einem der Ansprüche 1 bis 5, wobei die zumindest eine mit einer profilierten Oberfläche versehene Schicht eine Haftvermittlerschicht (4, 6) der Rohrleitung (1) ist, die mit zumindest einer profilierten Oberfläche an eine weitere Schicht der Rohrleitung (1) bevorzugt an eine mittlere Barriereschicht (5) der Rohrleitung (1) angeschlossen ist.

7. Kraftfahrzeugrohrleitung nach einem der Ansprüche 1 bis 6, wobei zumindest die mit zumindest einer profilierten Oberfläche versehene Schicht und die zumindest eine an die profilierte Oberfläche angeschlossene Schicht durch Koextrusion hergestellt sind.

8. Kraftfahrzeugrohrleitung nach einem der Ansprüche 1 bis 7, wobei die Profilierung der zumindest einen profilierten Oberfläche in Form von Stegen und Nuten ausgebildet ist, wobei sich die Stege und Nuten bevorzugt in Längsrichtung der Rohrleitung (1) erstrecken.

9. Kraftfahrzeugrohrleitung nach einem der Ansprüche 1 bis 8, wobei die Höhendifferenz Δh zwischen den Maxima (9) und den den Maxima (9) unmittelbar benachbarten Minima (19) 1 bis 20 µm und bevorzugt 2 bis 15 µm beträgt.

10. Kraftfahrzeugrohrleitung nach einem der Ansprüche 1 bis 9, wobei zumindest zwei, vorzugsweise zwei Haftvermittlerschichten (4, 6) vorgesehen sind und wobei zumindest eine Oberfläche jeder Haftvermittlerschicht (4, 6) profiliert ausgebildet ist.

11. Kraftfahrzeugrohrleitung nach Anspruch 10, wobei zwischen zwei Haftvermittlerschichten (4, 6) zumindest eine Barriereschicht (5) zwischengeschaltet ist und wobei die beiden Haftvermittlerschichten (4, 6) mit ihren profilierten Oberflächen unmittelbar an die - vorzugsweise ebenfalls profilierten - Oberflächen der Barriereschicht bzw. der Barriereschichten angeschlossen sind.

## Claims

1. A multilayer motor vehicle pipe, in particular fuel pipe for motor vehicles, wherein the pipe (1) has at least two layers, preferably at least three layers (4, 5, 6) made of plastic, wherein at least one surface of at least one layer connected with an additional layer has a profiled design, wherein the profiling has maximums (9) and minimums (10),
**characterized in that**
the profiling of the at least one profiled surface has a wavy or wavelike cross section, wherein the difference in height Δh between the maximums (9) and the minimums (10) directly adjacent to the maximums (9) lies between 1 and 100 µm, primarily between 1 and 50 µm, and preferably between 1 and 25 µm, and wherein the distances a between the maximums (9) and the minimums (10) directly adjacent to the maximums (9) of a profiled surface measure 1 to 100 µm.

2. The motor vehicle pipe according to claim 1, wherein the surface of an additional or second layer connected with a profiled surface of a first layer also has a profiled design, wherein this profiling of the second layer preferably also has maximums (9) and minimums (10), and wherein the difference in height Δh between the maximums (9) and the minimums (10) directly adjacent to the maximums (9) lies between 1 and 100 µm, primarily between 1 and 50 µm, and preferably between 1 and 25 µm.

3. The motor vehicle pipe according to claim 2, wherein the maximums (9) of the profiled surface of the first layer engage positively-and preferably non-positively-into the minimums (10) of the profiled surface of the second layer and vice versa.

4. The motor vehicle pipe according to one of claims 1 to 3, wherein the at least one profiled layer or the at least one profiled surface of this layer runs over at least 80 %, primarily over at least 90 %, and preferably over at least 95 % of the periphery of the pipe (1), and especially preferably over the entire periphery of the pipe (1).

5. The motor vehicle pipe according to one of claims 1 to 4, wherein at least one layer provided with at least one profiled surface is a (middle) layer of the pipe, which over its two surfaces is connected with a respective additional layer of the pipe.

6. The motor vehicle pipe according to one of claims 1 to 5, wherein the at least one layer provided with a profiled surface is a bonding layer (4, 6) of the pipe (1), which with at least one profiled surface is attached to an additional layer of the pipe (1), preferably to a middle barrier layer (5) of the pipe (1).

7. The motor vehicle pipe according to one of claims 1 to 6, wherein at least the layer provided with at least one profiled surface and the at least one layer attached to the profiled surface are manufactured via coextrusion.

8. The motor vehicle pipe according to one of claims 1 to 7, wherein the profiling of the at least one profiled surface is designed in the form of bars and grooves, wherein the bars and grooves preferably extend in the longitudinal direction of the pipe (1).

9. The motor vehicle pipe according to one of claims 1 to 8, wherein the difference in height Δh between the maximums (9) and the minimums (19) directly adjacent to the maximums (9) measures 1 to 20 µm, and preferably 2 to 15 µm.

10. The motor vehicle pipe according to one of claims 1 to 9, wherein at least two, preferably two bonding layers (4, 6) are provided, and wherein at least one surface of each bonding surface (4, 6) has a profiled design.

11. The motor vehicle pipe according to claim 10, wherein at least one barrier layer (5) is interspersed between two bonding layers (4, 6), and wherein the profiled surfaces of the two bonding layers (4, 6) are directly attached to the-preferably likewise profiled-surfaces of the barrier layer or the barrier layers.

## Revendications

1. Conduite de véhicule automobile multicouches, en particulier conduite de carburant pour véhicules automobiles, sachant que la conduite (1) comporte au moins deux couches, de préférence au moins trois couches (4, 5, 6) en matière plastique, sachant qu'au moins une surface reliée à une autre couche au moins d'une couche est constituée profilée, sachant que ce profilage comporte des maximuma (9) et des minima (10),
**caractérisée en ce que**
le profilage d'au moins une surface profilée est constitué en section de forme ondulatoire ou de type ondulé, sachant que la différence de hauteur Δh se situe entre les maxima (9) et les minima (10) directement voisins des maxima (9), entre 1 et 100 µm, de préférence entre 1 et 50 µm et de façon préférée entre 1 et 25 µm et sachant que les distances a entre les maxima (9) et les minima (10), directement voisins des maxima (9) d'une surface profilée vont de 1 à 100 µm.

2. Conduite de véhicule automobile selon la revendication 1, sachant que la surface reliée à une surface profilée d'une première couche d'une autre ou deuxième couche est également constituée profilée, sachant de préférence que ce profilage de la deuxième couche comporte également des maxima (9) et des minima (10) et sachant que la différence de hauteur Δh entre les maxima (9) et les minima (10) directement voisins des maxima (9) se situe entre 1 et 100 µm, de préférence entre 1 et 50 µm et de façon préférée entre 1 et 25 µm.

3. Conduite de véhicule automobile selon la revendication 2, sachant que les maxima (9) de la surface profilée de la première couche viennent en prise, par conformité de forme, et de préférence par conformité de force, dans les minima (10) de la surface profilée de la deuxième couche et vice versa.

4. Conduite de véhicule automobile selon l'une quelconque des revendications 1 à 3, sachant qu'au moins une couche profilée ou au moins une surface profilée de cette couche fait le tour sur au moins 80 %, de préférence sur au moins 90 % et de préférence sur au moins 95 % de la périphérie de la conduite (1) et fait le tour en particulier de préférence sur toute la périphérie de la conduite (1).

5. Conduite de véhicule automobile selon l'une quelconque des revendications 1 à 4, sachant qu'au moins une couche dotée d'au moins une surface profilée est une couche (centrale) de la conduite, qui est reliée sur ses deux surfaces respectivement à une autre couche de la conduite.

6. Conduite de véhicule automobile selon l'une quelconque des revendications 1 à 5, sachant qu'au moins une couche dotée d'au moins une surface profilée est une couche d'agent adhésif (4, 6) de la conduite (1), qui est raccordée à au moins une surface profilée sur une autre couche de la conduite (1), de préférence sur une couche barrière centrale (5) de la conduite (1).

7. Conduite de véhicule automobile selon l'une quelconque des revendications 1 à 6, sachant qu'au moins une couche dotée d'au moins une surface profilée et au moins une couche raccordée à la surface profilée sont fabriquées par coextrusion.

8. Conduite de véhicule automobile selon l'une quelconque des revendications 1 à 7, sachant que le profilage d'au moins une couche profilée est constitué sous la forme de nervures et de rainures, sachant que les nervures et rainures s'étendent de préférence en direction longitudinale de la conduite (1).

9. Conduite de véhicule automobile selon l'une quelconque des revendications 1 à 8, sachant que la différence de hauteur Δh entre les maxima (9) et les minima (19) directement voisins des maxima (9) va de 1 à 20 µm et de préférence de 2 à 15 µm.

10. Conduite de véhicule automobile selon l'une quelconque des revendications 1 à 9, sachant qu'au moins deux, de préférence deux couches d'agent adhésif (4, 6) sont prévues et sachant qu'au moins une surface de chaque couche d'agent adhésif (4, 6) est constituée profilée.

11. Conduite de véhicule automobile selon la revendication 10, sachant qu'au moins une couche barrière (5) est intercalée entre deux couches d'agent adhésif (4, 6) et sachant que les deux couches d'agent adhésif (4, 6) sont raccordées à leurs surfaces profilées directement aux surfaces, de préférence également profilées, de la couche barrière ou des couches barrières.
